# EUROPÄISCHE PATENTSCHRIFT

(11) **EP 2 503 222 B1**
(45) Veröffentlichungstag und Bekanntmachung des Hinweises auf die Patenterteilung: **08.05.2013**
(21) Anmeldenummer: 11158286.2
(22) Anmeldetag: 15.03.2011
(51) Int. Cl.: F21S 8/10, F21V 5/00

(54) **Kraftfahrzeugleuchte und Verfahren zu deren Betrieb**
Motor vehicle light and method for its operation
Lampe de véhicule automobile et son procédé de fonctionnement

(43) Veröffentlichungstag der Anmeldung: 26.09.2012
(73) Patentinhaber: Odelo GmbH, 71409 Schwaikheim (DE)
(72) Erfinder: Krochmann, Eike, 72654, Neckartenzlingen (DE); Würtenberger, Dagmar, 70190, Stuttgart (DE)
(74) Vertreter: Benninger, Johannes

(56) Entgegenhaltungen:
- EP-A2- 2 058 585
- EP-A2- 2 143 991
- EP-A2- 2 154 426
- DE-A1- 19 753 096
- DE-A1- 19 945 775
- DE-T2- 69 803 297

## Beschreibung

Die Erfindung betrifft eine Kraftfahrzeugleuchte gemäß dem Oberbegriff des Anspruchs 1 sowie ein Verfahren zum Betrieb einer Kraftfahrzeugleuchte gemäß dem Oberbegriff des Anspruchs 14.

Eine Kraftfahrzeugleuchte besteht üblicherweise im Wesentlichen aus einem Gehäuse, mindestens einem darin angeordneten Leuchtmittel für wenigstens eine Lichtfunktion, gegebenenfalls mindestens einem typischerweise hinter dem Leuchtmittel in dem Gehäuse angeordneten oder durch dieses beispielsweise vermittels einer zumindest teilweisen Beschichtung gebildeten Reflektor und/oder zumindest einem vor dem Leuchtmittel angeordnete Optikelement, wie etwa einer Linse, einem Rinnenkonzentrator, z.B. einer Parabolrinne (CPC; Compound Parabolic Concentrator) oder dergleichen zur Ausformung einer definierten Abstrahlcharakteristik, sowie einer das wenigstens eine Leuchtmittel und den gegebenenfalls vorgesehenen mindestens einen Reflektor sowie das gegebenenfalls vorgesehene zumindest eine Optikelement gegen Witterungseinflüsse schützenden, kurz auch als Lichtscheibe bezeichneten transparenten Abdeckung. Die Lichtscheibe umschließt gemeinsam mit dem Gehäuse einen das mindestens eine Leuchtmittel und den gegebenenfalls vorgesehenen zumindest einen Reflektor sowie das gegebenenfalls vorgesehene Optikelement beherbergenden Leuchteninnenraum. In dem Leuchteninnenraum kann zwischen Leuchtmittel und Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel zu kaschieren. Das Gehäuse bzw. der Leuchteninnenraum kann in mehrere Kammern mit jeweils eigenen Leuchtmitteln, eventuell Reflektoren und/oder Optikelementen und/oder Optikscheiben, sowie gegebenenfalls Lichtscheiben unterteilt sein, von denen mehrere Kammern gleiche oder jede Kammer eine andere Lichtfunktionen erfüllen kann.

Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Für die einzelnen Lichtfunktionen sind darüber zum Teil unterschiedliche Helligkeiten bzw. Sichtweiten sowie zum Teil unterschiedliche Lichtfarben zugeordnet. Dabei können mehrere Lichtfunktionen gleicher Lichtfarbe und gleicher Helligkeit von einem oder mehreren Leuchtmitteln gemeinsam erfüllt werden.

Durch US 7,642,908 B2 ist eine Kraftfahrzeugleuchte mit einer Bremslichtfunktion und mit einer Nebellichtfunktion bekannt. Der Bremslichtfunktion ist eine Bremslichtpartie mit einer Bremslichtquelle zugeordnet, welche bei Bedarf Bremslicht abstrahlt. Der Nebellichtfunktion ist eine Nebellichtpartie mit einer Nebellichtquelle zugeordnet, welche bei Bedarf das Bremslicht oder Nebellicht abstrahlt. Zwischen der Bremslichtpartie und der Nebellichtpartie ist eine Abstandspartie mit einer Abstandslichtquelle vorgesehen. Die Abstandslichtpartie strahlt Bremslicht ab, wenn die Nebellichtpartie Bremslicht abstrahlt, so dass wenn die Nebellichtpartie keine Nebellichtfunktion erfüllt, alle drei Partien die Bremslichtfunktion erfüllen. Erfüllt die Nebellichtpartie die Nebellichtfunktion, so verbleibt die Abstandslichtquelle dunkel und nur die Bremslichtpartie vermag die Bremslichtfunktion zu erfüllen.

Ebenfalls ist es möglich, dass mehrere Lichtfunktionen gleicher Lichtfarbe und unterschiedlicher Helligkeit von einem oder mehreren Leuchtmitteln gemeinsam erfüllt werden. Ein Beispiel hierfür ist eine kombinierte Rück-Brems-Lichtfunktion, welche beispielsweise durch eine unterschiedlich starke Bestromung eines oder mehrerer Leuchtmittel verwirklicht werden kann.

Durch DE 197 53 096 A1 ist eine Kraftfahrzeugleuchte mit zumindest zwei Lichtfunktionen und einem von einem Gehäuse und einer Lichtscheibe umschlossenen Leuchteninnenraum bekannt. Die Kraftfahrzeugleuchte weist mindestens eine Leucht- bzw. Funktionsfläche mit Leuchtdioden einheitlicher Farbgebung als Lichtquellen zur Erfüllung einer Lichtfunktion auf. Die Kraftfahrzeugleuchte weist wenigstens eine Fläche auf, welche zur Erfüllung einer zusätzlichen Lichtfunktion zusätzliche Leuchtdioden gleicher Farbgebung aufweist. Neben dieser Leuchtfläche sind weitere Leuchtflächen vorgesehen, in denen blaue, grüne und rote Leuchtdioden angeordnet sein können, um durch additive Farbmischung eine Blinklichtfunktion oder eine Rückfahrlichtfunktion wahrzunehmen. Jede Lichtfunktion wird dabei nur durch die für die jeweilige Lichtfunktion vorgesehenen Leuchtdioden erfüllt, wobei jeder Lichtfunktion genau die Fläche zur Verfügung steht, welche von den hierfür vorgesehenen Leuchtdioden eingenommen ist.

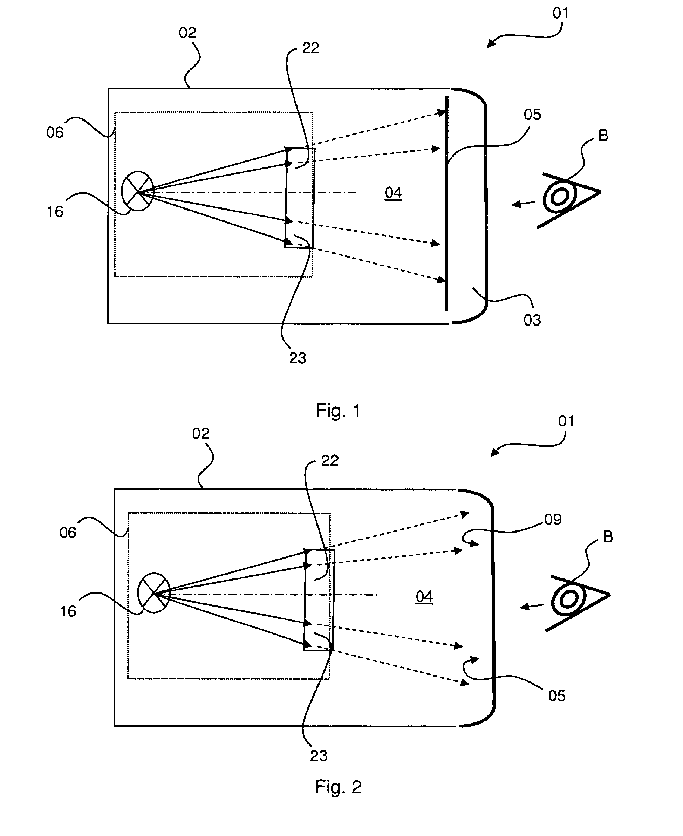

Durch die gattungsgemäße DE 199 45 775 A1 ist eine Kraftfahrzeugleuchte bekannt, welche mehrere Leuchtflächen aufweist. Einige dieser Leuchtflächen können mehrere unterschiedliche Lichtfunktionen wahrnehmen. Fig.2b zeigt ein Beispiel, in dem sich mehrere Lichtfunktionen (Schluss-, Brems- und Nebelschlußlicht) die gesamten Leuchtflächen flächenanteilig teilen.

Fig.2a zeigt ein Beispiel in dem die Leuchtflächen entweder der Schlusslichtfunktion oder der Bremslichtfunktion zugeordnet sind. Im Fall der Schlusslichtfunktion werden die Lichtquellen bestromt und wenn eine Bremstichtfunktion benötigt wird, werden die gleichen Lichtquellen entsprechend höher bestromt. Der Schlusslichtfunktion ist während der gleichzeitigen Nutzung der Bremslichtfunktion somit keine Partie der Leuchtflächen zugeordnet. Die Schlusslichtfunktion geht damit während der gleichzeitigen Nutzung der Bremslichtfunktion sozusagen unter. Ein Betrachter nimmt also nur die hellere Bremslichtfunktion wahr.

Diesen Kraftfahrzeugleuchten ist gemein, dass zumindest jeder Lichtfarbe zumindest eine bestimmte, vorgegebene Partie der Lichtscheibe zugeordnet ist und dass die Abstrahlrichtung jeden Leuchtmittels einer oder mehrerer Lichtfunktionen durch die bestimmte, vorgegebene, auch als Lichtdurchtrittsfläche bezeichnete Partie der Lichtscheibe hindurch gerichtet ist.

Als Folge hiervon ist bei einer derartigen Kraftfahrzeugleuchte mit mehreren Lichtfunktionen die zumindest einer Lichtfunktion zur Verfügung stehende Lichtdurchtrittsfläche auf einen Teil der Lichtscheibe begrenzt. Dies hat im Vergleich zu einer Nutzung der vollen Fläche der Lichtscheibe für die zumindest eine Lichtfunktion, deren für den Lichtaustritt durch die Lichtscheibe hindurch zur Verfügung stehenden Lichtdurchtrittsfläche auf nur ein Teil der Lichtscheibe begrenzt ist, den Nachteil einer Einschränkung der Sichtbarkeit und damit eine Minderung der Signalwirkung einhergehend mit einer Einschränkung der Verkehrssicherheit zur Folge.

Noch deutlicher tritt dieser Nachteil bei einer Kraftfahrzeugleuchte mit mindestens zwei verschiedenen Lichtfunktionen mit insgesamt wenigstens zwei verschiedenen Lichtfarben hervor. Dort sind den verschiedenen Lichtfarben bereits Lichtdurchtrittsflächen durch die Lichtscheibe hindurch zugeteilt, so dass jeder Lichtfunktion nur ein Teil der Fläche der Lichtscheibe zur Verfügung steht. Hierbei müssen sich die Lichtfunktionen unterschiedlicher Lichtfarben unabhängig von deren Betriebszustand bzw. unabhängig von deren Betrieb oder Nichtbetrieb die Fläche der Lichtscheibe für den Lichtaustritt immer teilen, so dass die einer Lichtfunktion zur Verfügung stehende Lichtdurchtrittsfläche unabhängig von der Lichtfarbe immer auf einen Teil der Lichtscheibe begrenzt ist.

Der Erfindung liegt die Aufgabe zu Grunde, eine Kraftfahrzeugleuchte und ein Verfahren zum Betrieb einer Kraftfahrzeugleuchte zu entwickeln, welche die Verkehrssicherheit nachhaltig steigern.

Die Aufgabe wird jeweils gelöst mit den Merkmalen der unabhängigen Ansprüche.

Ein erster Gegenstand der Erfindung betrifft demnach eine Kraftfahrzeugleuchte mit zumindest zwei Lichtfunktionen und einem von einem Gehäuse und einer Lichtscheibe umschlossenen Leuchteninnenraum.

Die Kraftfahrzeugleuchte beherbergt mindestens eine von außen durch die Lichtscheibe hindurch beispielsweise vollständig oder zum Teil, vorzugsweise zum Großteil sichtbare Projektionsfläche. Bei der Projektionsfläche kann es sich beispielsweise um einen in dem Leuchteninnenraum untergebrachten Schirm oder um die dem Leuchteninnenraum zugewandte, beispielsweise rau bzw. diffus ausgeführte Innenseite der Lichtscheibe handeln.

Darüber hinaus umfasst die Kraftfahrzeugleuchte mindestens ein Mittel zur variablen Projektion der momentan benötigten einen oder mehreren Lichtfunktionen der Kraftfahrzeugleuchte zumindest auf den vollständigen, von außen durch die Lichtscheibe hindurch sichtbaren Teil der Projektionsfläche, so dass vorzugsweise immer die gesamte Lichtscheibe als Lichtdurchtrittsfläche für die eine oder mehrere momentan benötigten Lichtfunktionen genutzt wird.

Dabei steht zunächst zumindest der gesamte durch die Lichtscheibe hindurch sichtbare Teil der Projektionsfläche der variablen Projektion jeder allein und einzeln momentan benötigten Lichtfunktion zur Nutzung zur Verfügung. Durch Betrachtung der zumindest den von außerhalb des Leuchteninnenraums durch die Lichtscheibe hindurch sichtbaren Teil der Projektionsfläche vollständig einnehmenden Projektion von außerhalb des Leuchteninnenraums durch die Lichtscheibe hindurch steht dieser allein und einzeln momentan benötigten Lichtfunktion die gesamte Lichtscheibe als Lichtdurchtrittsfläche zur Verfügung.

Wenn eine weitere Lichtfunktion momentan benötigt wird, teilen sich die variablen Projektionen der dann momentan benötigten Lichtfunktionen die Nutzung.

Dadurch wird immer die gesamte Lichtscheibe als Lichtdurchtrittsfläche für die eine oder mehrere momentan benötigten Lichtfunktionen flächenanteilig genutzt.

Wenn mehrere Lichtfunktionen momentan benötigt sind, teilen sich diese die Projektionsfläche flächenanteilig.

Durch eine variable Projektion der momentan benötigten einen oder mehreren Lichtfunktionen zumindest auf den vollständigen, von außerhalb des

Leuchteninnenraums durch die Lichtscheibe hindurch sichtbaren Teil der Projektionsfläche, steht jeder momentan benötigten Lichtfunktion eine größtmögliche Lichtdurchtrittsfläche durch die Lichtscheibe hindurch zur Verfügung. Wird momentan beispielsweise nur eine Lichtfunktion benötigt, so steht dieser Lichtfunktion unabhängig von ihrer Lichtfarbe die vollständige Fläche der Lichtscheibe als Lichtdurchtrittsfläche zur Verfügung. Werden momentan zwei oder mehr Lichtfunktionen benötigt, so teilen sich diese bzw. deren variable Projektionen die Nutzung der Projektionsfläche flächenanteilig.

Das flächenanteilige Verhältnis der Nutzung der Projektionsfläche durch die Projektion der einzelnen Lichtfunktionen mehrerer momentan benötigter Lichtfunktionen kann dabei beispielsweise abhängig von einem beispielsweise gewichteten Verhältnis der Wichtigkeit der Signalfunktionen der beteiligten Lichtfunktionen und/oder den herrschenden Umgebungsbedingungen, wie etwa Witterungs- und/oder Sichtverhältnisse und/oder Helligkeit sein. Andere Parameter zur Unterteilung sind ebenfalls alternativ oder zusätzlich denkbar.

Werden beispielsweise bei Tagfahrt eine Bremslichtfunktion und eine Blinklichtfunktion momentan benötigt, so können der Bremslichtfunktion und der Blinklichtfunktion beispielsweise jeweils die Hälfte der Projektionsfläche bzw. zumindest des von außerhalb des Leuchteninnenraums durch die Lichtscheibe hindurch sichtbaren Teils der Projektionsfläche zur flächenanteiligen Nutzung zur Verfügung gestellt werden. Alternativ oder zusätzlich ist denkbar, dass sich Bremslichtfunktion und Blinklichtfunktion die Projektionsfläche zeitlich teilen. Blinkt beispielsweise die Blinklichtfunktion auf, so kann dieser im zeitlichen Wechsel zumindest die vollständige, von außerhalb des Leuchteninnenraums durch die Lichtscheibe hindurch sichtbare Projektionsfläche zur Nutzung zur Verfügung gestellt werden, wobei zwischen den Blinkintervallen zumindest der vollständige von außerhalb des Leuchteninnenraums durch die Lichtscheibe hindurch sichtbare Teil der Projektionsfläche der Bremslichtfunktion zur Nutzung zur Verfügung gestellt werden kann. Möglich ist auch, dass sich Brems- und Blinklichtfunktion nur ein Teil der Projektionsfläche zeitlich teilen. So kann bei einer momentan benötigten Bremslichtfunktion dieser grundsätzlich z.B. die Hälfte der Projektionsfläche bzw. des von außerhalb des Leuchteninnenraums durch die Lichtscheibe hindurch sichtbaren Teils der Projektionsfläche flächenanteilig zur Nutzung zu Verfügung gestellt werden, wohingegen sich Brems- und Blinklichtfunktion die verbleibende Hälfte zeitlich im Wechsel teilen können. Kommen weitere Lichtfunktionen hinzu, beispielsweise wegen Rückwärtsfahrt eine Rückfahrlichtfunktion weisser Lichtfarbe, so kann dieser entsprechend ebenfalls ein Teil der Projektionsfläche bzw. ein Teil des von außerhalb des Leuchteninnenraums durch die Lichtscheibe hindurch sichtbaren Teils der Projektionsfläche zur Nutzung zur Verfügung gestellt werden.

Wird beispielsweise bei Dunkelheit und/oder schlechter Sicht eine Rücklicht- und/oder gar eine Nebelschlusslichtfunktion benötigt, so kann diesen momentan benötigten Lichtfunktionen unabhängig von anderen momentan benötigten Lichtfunktionen immer beispielsweise ein Großteil der Projektionsfläche bzw. des von außerhalb des Leuchteninnenraums durch die Lichtscheibe hindurch sichtbaren Teils der Projektionsfläche zur flächenanteiligen Nutzung zur Verfügung gestellt werden. Kommt eine weitere momentan benötigte Lichtfunktion hinzu, so wird dieser beispielsweise nur ein kleinerer Teil der Projektionsfläche bzw. des von außerhalb des Leuchteninnenraums durch die Lichtscheibe hindurch sichtbaren Teils der Projektionsfläche zur flächenanteiligen Nutzung zur Verfügung gestellt, so dass den Lichtfunktionen mit momentan höherer Wichtigkeit ein größerer Anteil der Lichtscheibe als Lichtdurchtrittsfläche zur Verfügung steht. Herrschen nach einiger Zeit wieder bessere Sichtverhältnisse, so kann der beispielsweise der Nebelschlusslichtfunktion zur Verfügung gestellte Anteil beispielsweise kontinuierlich mit zunehmender Verbesserung der Sichtverhältnisse verkleinert werden, bis zu einem dem Abschalten der Nebelschlusslichtfunktion gleich kommenden Verschwinden des der Nebelschlusslichtfunktion flächenanteilig zur Nutzung zur Verfügung gestellten Teils der Projektionsfläche bzw. des von außerhalb des Leuchteninnenraums durch die Lichtscheibe hindurch sichtbaren Teils der Projektionsfläche.

In jedem Fall ist entgegen dem Stand der Technik bei der Erfindung keiner der Lichtfunktionen der Kraftfahrzeugleuchte ein bestimmter Teil der Lichtscheibe als Lichtfurchtrittsfläche zugeteilt, sondern die Zuteilung erfolgt variabel, in Abhängigkeit von der oder den momentan benötigten Lichtfunktionen, um immer die gesamte Lichtscheibe als Lichtdurchtrittsfläche für eine oder mehrere momentan benötigte Lichtfunktionen zu nutzen.

Es ist ersichtlich, dass die Erfindung in jedem Fall verwirklicht ist, indem durch eine variable, vollständige Projektion einer oder mehrerer Lichtfunktionen einer Heckleuchte auf eine von der Kraftfahrzeugleuchte beherbergte Projektionsfläche zumindest der vollständige, von außerhalb des Leuchteninnenraums durch die Lichtscheibe hindurch sichtbare Teil der Projektionsfläche, jeder Lichtfunktion zur Verfügung gestellt werden kann. Durch Betrachtung der zumindest den von außerhalb des Leuchteninnenraums durch die Lichtscheibe hindurch sichtbaren Teil der Projektionsfläche vollständig einnehmenden Projektion im Durch- oder im Auflicht von außerhalb des Leuchteninnenraums durch die Lichtscheibe hindurch steht jeder momentan benötigten Lichtfunktion der größtmögliche Anteil der Lichtscheibe als Lichtdurchtrittsfläche zur Verfügung.

Die zumindest den durch die Lichtscheibe hindurch von außerhalb des Leuchteninnenraums sichtbaren Teil der Projektionsfläche einnehmende Projektion der einen oder mehreren momentan benötigten Lichtfunktionen ist dabei im Durch- oder im Auflicht von außerhalb des Leuchteninnenraums durch die Lichtscheibe hindurch sichtbar.

Die Erfindung behebt so unter Anderem das Problem, wonach bislang bei z.B. als Heckleuchten ausgebildeten Kraftfahrzeugleuchten den einzelnen Lichtfunktionen definierte Lichtdurchtrittsflächen zugeordnet sind. Dies stellt eine Einschränkung sowohl im Hinblick auf die Gestaltungsmöglichkeiten, als auch im Hinblick auf die Verkehrssicherheit dar, da die maximal für eine Lichtfunktion zur Verfügung stehende Lichtdurchtrittsfläche beschränkt ist. Durch die Erfindung wird diese Beschränkung aufgehoben und die Verkehrssicherheit nachhaltig erhöht.

Die von der Kraftfahrzeugleuchte beherbergte Projektionsfläche kann beispielsweise:
- im Leuchteninnenraum angeordnet, oder
- an der Innenseite der Lichtscheibe vorgesehen, oder
- durch die Innenseite der Lichtscheibe gebildet, oder
- an einer der Lichtscheibe gegenüberliegenden Rückwand des Leuchteninnenraums vorgesehen
sein.

Grundsätzlich kann auch eine Lichtleiteranordnung, insbesondere eine Flächenlichtleiteranordnung, die Projektionsfläche umfassen. Hierbei weist die Lichtleiteranordnung mindestens eine als die Projektionsfläche ausgeführte Lichtaustrittsfläche auf, sowie mindestens eine von der Projektionsfläche verschiedene Lichteinkoppelfläche. An der mindestens einen Lichteinkoppelfläche wird Licht für die momentan benötigten Lichtfunktionen variabel eingekoppelt, dass dann an der Projektionsfläche vollständig über diese verteilt aus der Lichtleiteranordnung austritt.

Die Projektionsfläche kann zur Projektion der momentan benötigten einen oder mehreren Lichtfunktionen im Auflicht bzw. rückscheinend und/oder im Durchlicht bzw. durchscheinend vorgesehen sein.

Die Mittel zur variablen Projektion einer oder mehrerer Lichtfunktionen der Kraftfahrzeugleuchte zumindest auf den vollständigen, durch die Lichtscheibe hindurch von außerhalb des Leuchteninnenraums sichtbaren Teil der Projektionsfläche, können mindestens ein Leuchtmittel mit wenigstens einer Lichtquelle umfassen.

Die Projektionsfläche kann Teil zumindest eines Leuchtmittels sein. So kann beispielsweise ein Display als von außerhalb des Leuchteninnenraums durch die Lichtscheibe hindurch sichtbare Projektionsfläche vorgesehen sein. Denkbar ist beispielsweise die Verwendung eines wahlweise z.B. hintergrundbeleuchteten LCD-Displays odgl. als von einem Leuchtmittel umfasste Projektionsfläche.

Demnach können die Mittel zur variablen Projektion die Projektionsfläche selbst umfassen bzw. ein Teil dieser sein oder von dieser umfasst werden.

Das mindestens eine Leuchtmittel sowie die wenigstens eine Lichtquelle des mindestens einen Leuchtmittels sind vorzugsweise insgesamt in der Lage, zumindest Licht in allen zur Erfüllung der mindestens zwei Lichtfunktionen der Kraftfahrzeugleuchte benötigten Lichtfarben abzustrahlen. Dabei kann es sich um eine oder um mehrere Lichtfarben handeln.

Alternativ ist möglich, dass das mindestens eine Leuchtmittel sowie die wenigstens eine Lichtquelle des mindestens einen Leuchtmittels eine Grundfarbe abstrahlen, welche vorzugsweise sämtliche zur Erfüllung der mindestens zwei Lichtfunktionen der Kraftfahrzeugleuchte benötigten Lichtfarben umfasst, welche Lichtfarben dann im Strahlengang zwischen Lichtquelle und Projektionsfläche vermittels Filter je nach Bedarf extrahiert werden können.

Ferner umfassen die Mittel zur variablen Projektion Mittel zur veränderlichen Steuerung der Lichtabstrahlrichtung des mindestens einen Leuchtmittels auf wenigstens eine veränderliche Partie der Projektionsfläche. Die Dimensionen der veränderlichen Partie der Projektionsfläche sind dabei zwischen einem Teil der Projektionsfläche und der vollständigen Projektionsfläche variabel.

Bei den Mitteln zur veränderlichen Steuerung kann es sich beispielsweise um einen oder mehrere kurz auch als DMD (von Digital Micromirror Device) oder auch als Mikrospiegelarray bezeichnete Mikrospiegelaktoren handeln.

Alternativ oder zusätzlich zu einem oder mehreren DMDs ist die Verwendung eines oder mehrerer Mikrosysteme denkbar, welche zur gezielten Ablenkung von Licht dienen. Ein Beispiel für ein solches Mikrosystem ist ein kurz auch als GLV bezeichnetes Beugungsgitter- bzw. Gräting-Licht-Ventil. Das Funktionsprinzip basiert im Gegensatz zu einem Mikrospiegelaktor auf Lichtbeugung an einem optischen Gitter. Dazu können winzige Metallstreifen elektrostatisch auf und ab bewegt werden. Hiermit kann jeder Bildpunkt zwischen Gitterfunktion und reflektierendem Spiegel hin- und hergeschaltet werden.

Der Lichtstrahl für die Projektion eines Bildes kann von einem GLV je nach Bedarf durch eine beispielsweise als Primäroptik ausgeführte Linse auf die Projektionsfläche oder auf eine als Lichtfalle dienende, vorzugsweise schwarze Fläche reflektiert werden, welche von außerhalb durch die Lichtscheibe hindurch nicht einsehbar ist. So wird in einer für das menschliche Auge nicht erkennbaren Geschwindigkeit das Bild auf der Projektionsfläche aufgebaut. Die Farbe der Bildpunkte kann durch eine rotierende Scheibe in den Grundfarben bestimmt werden, wenn ein Leuchtmittel mit einer Lichtquelle verwendet wird, welche Licht abstrahlt, das sämtliche benötigten Lichtfarben umfasst. Alternativ können Leuchtmittel und/oder Lichtquellen verschiedener Lichtfarben gezielt mit der Steuerung des Mikrosystems im Pulsbetrieb getaktet betrieben werden. Durch die kurze Folge dieser Lichtpulse werden sie für das menschliche Auge als Mischfarben wahrnehmbar.

Eine weitere alternative oder zusätzliche Ausgestaltung für ein Mittel zur veränderlichen Steuerung ist ein so genanntes Liquid Crystal on Silicon, kurz LCoS. Das LCoS ist einem LCD ähnlich, wobei es im Gegensatz zu diesem es das Licht allerdings nicht durch lässt, sondern reflektiert.

Zusammengefasst können die Mittel zur variablen Projektion beispielsweise durch ein oder mehrere Mittel zur Videoprojektion verwirklicht sein, wie sie beispielsweise von Beamern zur Projektion von Bildern und Grafiken bekannt sind.

Die Kraftfahrzeugleuchte kann beispielsweise als Heckleuchte für ein Kraftfahrzeug ausgebildet sein.

Wichtig ist hervorzuheben, dass die Kraftfahrzeugleuchte zusätzlich zu der Projektionsfläche sowie zusätzlich zu den Mitteln zur variablen Projektion über mindestens eine konventionell vermittels beispielsweise eines oder mehrerer beispielsweise in einer separaten Reflektorkammer untergebrachten Leuchtmittels und/oder eines Lichtleiters verwirklichte Lichtfunktion verfügen kann. Bei dieser mindestens einen Lichtfunktion kann es sich beispielsweise um eine solche Lichtfunktion handeln, deren Lichtwerte und/oder deren gesetzliche Vorschriften vermittels einer Projektion nur unter hohem Aufwand zu erfüllen sind.

Alternativ oder zusätzlich können eine oder mehrere Lichtfunktionen unabhängig von der Kraftfahrzeugleuchte untergebracht sein. Beispielsweise können eine der Erfüllung einer Nebelschlusslichtfunktion dienende Nebelschlussleuchte und/oder ein der Erfüllung einer Rückfahrlichtfunktion dienender Rückfahrscheinwerfer zusammen in einem Modul der Kraftfahrzeugleuchte örtlich ausgelagert sein, während sich in einem anderen Bereich der Kraftfahrzeugleuchte die verbleibenden Lichtfunktionen konzentrieren. Ein Grund hierfür kann beispielsweise sein, dass die Nebelschlusslichtfunktion einen Mindestabstand zum Bremslichtfunktion aufgrund gesetzlicher Vorgaben einhalten muss. Durch diese Abtrennung ist dann zusätzlich eine größere Gestaltungsfreiheit gegeben.

Ein zweiter Gegenstand der Erfindung betrifft ein Verfahren zum Betrieb einer zuvor beschriebenen Kraftfahrzeugleuchte mit mindestens zwei Lichtfunktionen beispielsweise unterschiedlicher und/oder gleicher Farbe. Das Verfahren zeichnet sich durch eine variable Projektion der momentan benötigten einen oder mehreren Lichtfunktionen der Kraftfahrzeugleuchte auf zumindest den vollständigen, von außerhalb des Leuchteninnenraums durch die Lichtscheibe hindurch sichtbaren Teil einer von der Kraftfahrzeugleuchte beherbergten Projektionsfläche aus.

Dabei steht zunächst zumindest der gesamte durch die Lichtscheibe hindurch sichtbare Teil der Projektionsfläche der variablen Projektion jeder allein und einzeln momentan benötigten Lichtfunktion zur Nutzung zur Verfügung. Dieser momentan benötigten Lichtfunktion steht durch Betrachtung der zumindest den von außerhalb des Leuchteninnenraums durch die Lichtscheibe hindurch sichtbaren Teil der Projektionsfläche vollständig einnehmenden Projektion von auβerhalb des Leuchteninnenraums durch die Lichtscheibe hindurch die gesamte Lichtscheibe als Lichtdurchtrittsfläche zur Verfügung.

Wenn eine weitere Lichtfunktion momentan benötigt wird, teilen sich die variablen Projektionen der dann momentan benötigten Lichtfunktionen die Nutzung zumindest des durch die Lichtscheibe hindurch sichtbaren Teils der Projektionsfläche, so dass immer die gesamte Lichtscheibe als Lichtdurchtrittsfläche für die eine oder mehrere momentan benötigten Lichtfunktionen genutzt wird.

Mit anderen Worten zeichnet sich das Verfahren durch eine zumindest den vollständigen von außerhalb des Leuchteninnenraums durch die Lichtscheibe hindurch sichtbaren Teil einer von der Kraftfahrzeugleuchte beherbergten Projektionsfläche einnehmende variable Projektion jeder einen momentan benötigten Lichtfunktion der Kraftfahrzeugleuchte oder mehrerer momentan benötigter Lichtfunktionen der Kraftfahrzeugleuchte aus.

Durch Betrachtung der zumindest den von außerhalb des Leuchteninnenraums durch die Lichtscheibe hindurch sichtbaren Teil der Projektionsfläche vollständig einnehmenden Projektion im Durch- oder im Auflicht von außerhalb des Leuchteninnenraums durch die Lichtscheibe hindurch steht jeder momentan benötigten Lichtfunktion der größtmögliche Anteil der Lichtscheibe als Lichtdurchtrittsfläche zur Verfügung.

Vorteile gegenüber dem Stand der Technik ergeben sich unter Anderem dadurch, dass durch eine variable Projektion der Lichtfunktionen einer Heckleuchte auf eine Projektionsfläche, beispielsweise einen Schirm, und die Betrachtung der Projektion im Durchlicht oder im Auflicht, die vollständige Projektions- bzw. Schirmfläche jeder Leuchtfunktion zur Verfügung gestellt werden kann, wodurch ein veränderlicher Anteil der zur Abstrahlung von Lichtfunktionen vorgesehenen Gesamtfläche einer die beispielsweise als einen Schirm ausgeführte Projektionsfläche abdeckenden oder diesen bildenden Lichtscheibe einer Heckleuchte für Kraftfahrzeuge den einzelnen Lichtfunktionen zur Verfügung steht.

Sich hierdurch ergebende Vorteile sind beispielsweise:
- ein Entfall von bedampften, beispielsweise metallisierten Flächen, welche bei konventioneller Kammerunterteilung einer Kraftfahrzeugleuchte als Reflektoren für die einzelnene Leuchtmittel dienen,
- eine konstruktiv einfachere und kostengünstigere Ausführung des Gehäuses von Kraftfahrzeugleuchten,
- eine Verringerung der Anzahl von Leuchtmitteln sowie von Lichtquellen, da mit einem Leuchtmittel gleichzeitig mehrere Funktionen dargestellt werden können,
- die Schaffung der Möglichkeit einer individuellen Gestaltung des dargebotenen Signalbilds der momentan benötigten Lichtfunktionen und/oder der dargestellten Information.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: ein erstes Ausführungsbeispiel einer Kraftfahrzeugleuchte mit einer variablen durchscheinenden Projektion der momentan benötigten Lichtfunktionen auf eine im Leuchteninnenraum der Kraftfahrzeugleuchte untergebrachte Projektionsfläche in einem Längsschnitt.
- Fig. 2: ein zweites Ausführungsbeispiel einer Kraftfahrzeugleuchte mit einer variablen durchscheinenden Projektion der momentan benötigten Lichtfunktionen auf eine durch die Innenseite der Lichtscheibe der Kraftfahrzeugleuchte gebildeten Projektionsfläche in einem Längsschnitt.

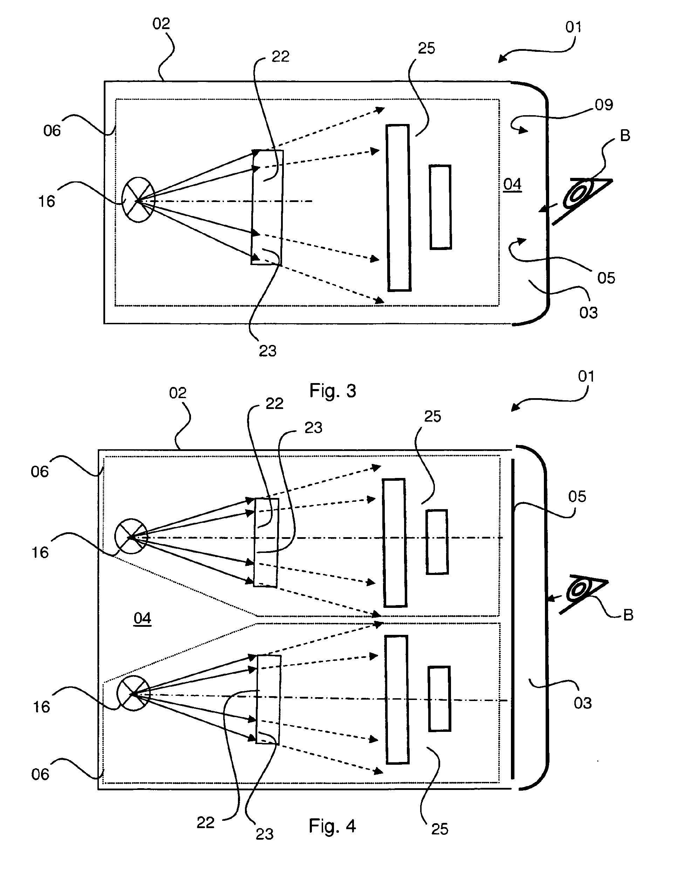

- Fig. 3: ein drittes Ausführungsbeispiel einer Kraftfahrzeugleuchte mit einer variablen durchscheinenden Projektion der momentan benötigten Lichtfunktionen auf eine durch die Innenseite der Lichtscheibe der Kraftfahrzeugleuchte gebildeten Projektionsfläche mit einem gemeinsamen Strahlengang für Lichtfunktionen verschiedener Lichtfarben in einem Längsschnitt.
- Fig. 4: ein viertes Ausführungsbeispiel einer Kraftfahrzeugleuchte mit einer variablen durchscheinenden Projektion der momentan benötigten Lichtfunktionen auf eine im Leuchteninnenraum der Kraftfahrzeugleuchte untergebrachte Projektionsfläche mit getrenntem Strahlengang für Lichtfunktionen verschiedener Lichtfarben in einem Längsschnitt.

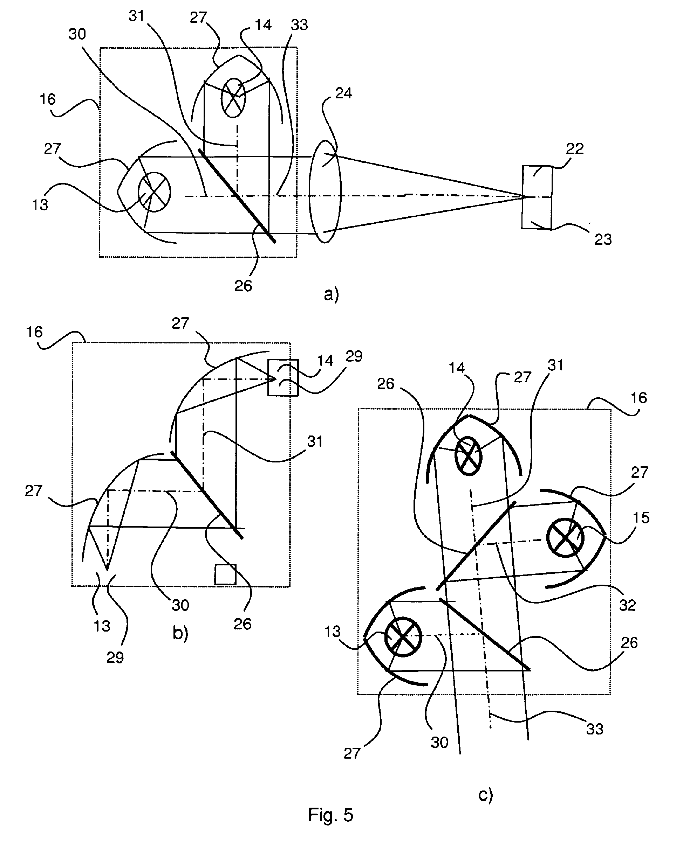

- Fig. 5: drei unterschiedliche Ausführungsbeispiele von Leuchtmitteln mit mehreren Lichtquellen zur Erzeugung unterschiedlicher Lichtfarben von Mitteln zur variablen Projektion momentan benötigter Lichtfunktionen einer Kraftfahrzeugleuchte auf eine von der Kraftfahrzeugleuchte beherbergte Projektionsfläche.

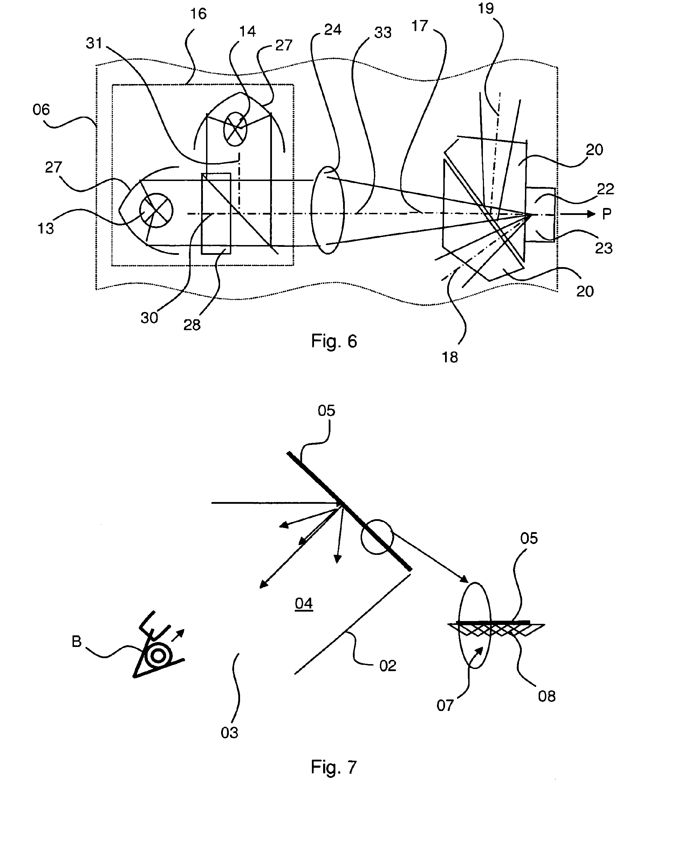

- Fig. 6: eine Teilansicht eines Mittels zur variablen Projektion momentan benötigter Lichtfunktionen einer Kraftfahrzeugleuchte auf eine von der Kraftfahrzeugleuchte beherbergte Projektionsfläche mit mehreren Leuchtmitteln mit gemeinsamem Strahlengang, von denen zumindest das dargestellte eine Leuchtmittel in der Lage ist, Licht in mehreren zur Erfüllung der Lichtfunktionen der Kraftfahrzeugleuchte benötigten Lichtfarben abzustrahlen.
- Fig. 7: eine Teilansicht einer von einer Kraftfahrzeugleuchte beherbergten Projektionsfläche zur variablen rückscheinenden Projektion momentan benötigter Lichtfunktionen im Auflicht auf die Projektionsfläche.

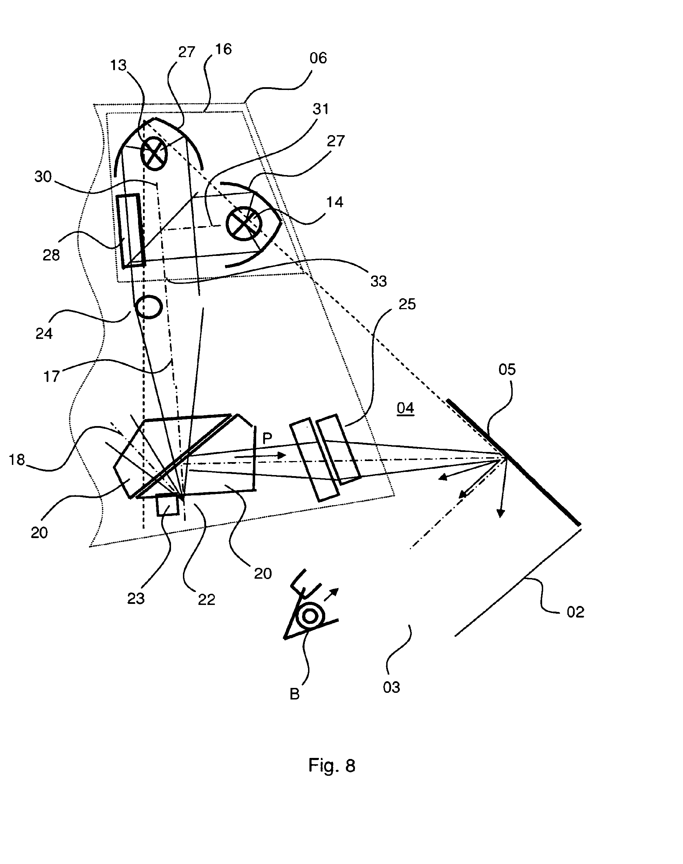

- Fig. 8: ein fünftes Ausführungsbeispiel einer Kraftfahrzeugleuchte mit einer variablen rückscheinenden Projektion der momentan benötigten Lichtfunktionen auf eine im Leuchteninnenraum der Kraftfahrzeugleuchte untergebrachte Projektionsfläche mit gemeinsamem Strahlengang mehrerer Leuchtmittel.

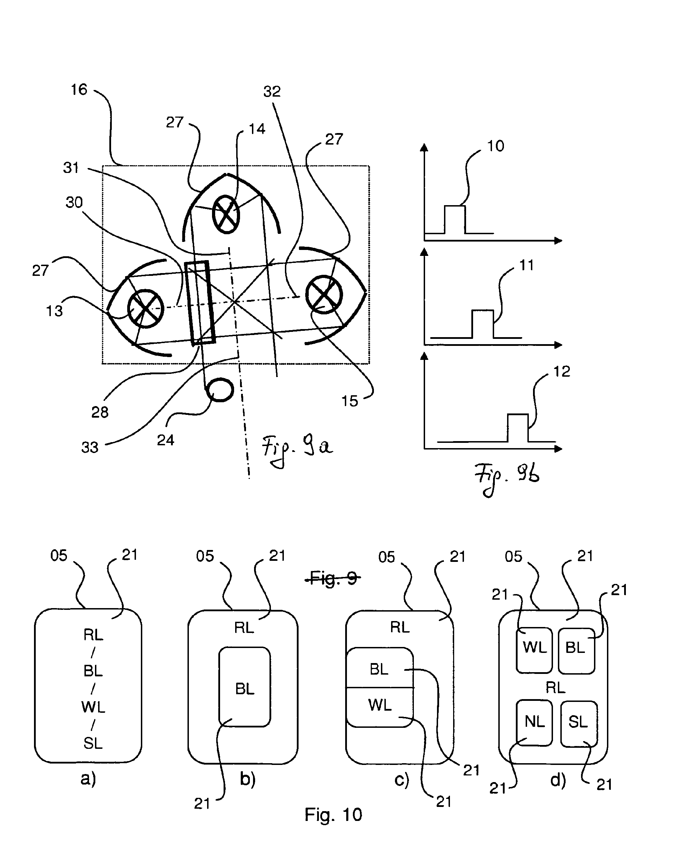

- Fig. 9: eine Teilansicht eines Leuchtmittels mit mehreren Lichtquellen für unterschiedliche Lichtfarben eines Mittels zur variablen Projektion momentan benötigter Lichtfunktionen einer Kraftfahrzeugleuchte auf eine von der Kraftfahrzeugleuchte beherbergte Projektionsfläche wie in Fig. 9a dargestellt, wobei in Fig. 9b, welche nicht Teil der Erfindung ist, wenn momentan mehrere Lichtfunktionen benötigt sind, vorgesehen ist, dass sich deren variable Projektionen die Projektionsfläche zeitlich teilen.
- Fig. 10: Darstellungen von außerhalb des Leuchteninnenraums durch die Lichtscheibe hindurch sichtbarer variabler Projektionen verschiedener momentan benötigter Lichtfunktionen einer Kraftfahrzeugleuchte, deren variable Projektionen sich die Projektionsfläche flächenanteilig teilen.

Eine in den Fig. 1 bis Fig. 9 ganz oder in Teilen dargestellte Kraftfahrzeugleuchte 01 weist einen von einem Gehäuse 02 und einer Lichtscheibe 03 umschlossenen Leuchteninnenraum 04 auf. Die Kraftfahrzeugleuchte 01 verfügt über zumindest zwei Lichtfunktionen RL, BL, WL, SL, NL unterschiedlicher und/oder gleicher Lichtfarben (Fig. 10). Wie in Fig. 10 dargestellt kann es sich hierbei um eine Rücklichtfunktion RL und/oder eine Bremslichtfunktion BL und/oder eine Wiederholblinklichtfunktion WL und/oder eine Rückfahrlichtfunktion SL und/oder eine Nebellichtfunktion NL handeln. Alternativ oder zusätzlich sind weitere Lichtfunktionen denkbar.

Die Kraftfahrzeugleuchte 01 beherbergt mindestens eine von einem Betrachter B von außen durch die Lichtscheibe 03 hindurch zumindest zum Teil sichtbare Projektionsfläche 05. Die Kraftfahrzeugleuchte 01 umfasst außerdem mindestens ein Mittel 06 zur variablen Projektion der momentan benötigten einen oder mehreren Lichtfunktionen RL, BL, WL, SL, NL der Kraftfahrzeugleuchte 01 zumindest auf den vollständigen, von außen durch die Lichtscheibe 03 hindurch sichtbaren Teil der Projektionsfläche 05, so dass immer die gesamte Lichtscheibe 03 als Lichtdurchtrittsfläche für jede eine oder für mehrere momentan benötigte Lichtfunktionen RL, BL, WL, SL, NL genutzt wird.

Die Projektionsfläche 05 kann rück- oder durchscheinend ausgeführt sein, je nachdem, ob eine Betrachtung der Projektion der momentan benötigten einen oder mehreren Lichtfunktionen RL, BL, WL, SL, NL von außerhalb des Leuchteninnenraums 04 durch die Lichtscheibe 03 hindurch im Auflicht oder im Durchlicht vorgesehen ist.

Bei den in den Fig. 1 bis Fig. 4 ganz dargestellten Kraftfahrzeugleuchten 01 ist eine Betrachtung der Projektion der momentan benötigten einen oder mehreren Lichtfunktionen RL, BL, WL, SL, NL von außerhalb des Leuchteninnenraums 04 durch die Lichtscheibe 03 hindurch im Durchlicht vorgesehen, wohingegen bei den in den Fig. 7 und Fig. 8 zum Teil dargestellten Kraftfahrzeugleuchten 01 eine Betrachtung der Projektion der momentan benötigten einen oder mehreren Lichtfunktionen RL, BL, WL, SL, NL von außerhalb des Leuchteninnenraums 04 durch die Lichtscheibe 03 hindurch im Auflicht vorgesehen ist.

Beispielsweise kann bei einer rückscheinenden Projektionsfläche 05 eine eine Reflektion in eine oder mehrere Vorzugsrichtungen begünstigende Oberflächenstruktur 07 wie in Fig. 7 dargestellt vorgesehen sein. Bei der Oberflächenstruktur 07 kann es sich beispielsweise um eine regelmäßige oder unregelmäßige Anordnung regelmäßiger oder unregelmäßiger Optikelemente 08, beispielsweise Prismen handeln. Bei diesen Optikelementen 08 kann es sich gleichzeitig um eine Auskoppelstruktur einer von einem Lichtleiter, beispielsweise einen Flächenlichtleiter umfassten Projektionsfläche 05 handeln. Ein solcher Lichtleiter kann beispielsweise für eine Hintergrundbeleuchtung vorgesehen sein. Die Hintergrundbeleuchtung kann einer Lichtfunktion RL, BL, WL, SL, NL zugeordnet sein, beispielsweise einer Rücklichtfunktion RL (vgl. Fig. 10).

Die mindestens eine von der Kraftfahrzeugleuchte 01 beherbergte Projektionsfläche 05 oder zumindest eine von mehreren von der Kraftfahrzeugleuchte 01 beherbergten Projektionsflächen 05 kann wie in Fig. 1, Fig. 4, Fig. 7 und Fig. 8 dargestellt im Leuchteninnenraum 04 angeordnet bzw. untergebracht sein.

Die mindestens eine von der Kraftfahrzeugleuchte 01 beherbergte Projektionsfläche 05 oder zumindest eine von mehreren von der Kraftfahrzeugleuchte 01 beherbergten Projektionsflächen 05 kann alternativ oder zusätzlich wie in Fig. 2 und Fig. 3, Fig. 7 und Fig. 8 dargestellt an der Innenseite 09 der Lichtscheibe 03 vorgesehen und/oder durch die Innenseite 09 der Lichtscheibe 03 gebildet sein.

Darüber hinaus sind Alternativen denkbar, wie etwa eine Unterbringung bzw. Anordnung an einer beispielsweise der Lichtscheibe 03 gegenüberliegenden Rückwand des Leuchteninnenraums 04 bzw. einer durch die Lichtscheibe 03 hindurch sichtbaren Wandung des Gehäuses 02.

Wenn momentan mehrere Lichtfunktionen RL, BL, WL, SL, NL benötigt sind, können sich deren variable Projektionen die Projektionsfläche 05 zeitlich teilen, wie schematisch durch zeitlich aufeinander folgende Steuersignale 10, 11, 12 für vermittels unterschiedlicher Lichtquellen 13, 14, 15 verwirklichte Lichtfunktionen RL, BL, WL, SL, NL gleicher Lichtfarben einer Kraftfahrzeugleuchte 01 in Fig. 9a) und in Fig. 9b), welche nicht Teil der Erfindung sind, dargestellt. Dabei ist zusätzlich denkbar, gleichzeitig benötigte Lichtfunktionen RL, BL, WL, SL, NL gleicher Lichtfarbe aber unterschiedlicher Helligkeit ebenso durch zeitlich versetzte Ansteuerung eines oder mehrerer Lichtquellen 13, 14, 15 zu erzeugen, so dass sich deren variable Projektionen unterschiedlicher Helligkeit die Projektionsfläche 05 zeitlich teilen.

Erfindungsgemäß teilen sich unterschiedliche Kombinationen momentan benötigter Lichtfunktionen RL, BL, WL, SL, NL unterschiedlicher und/oder gleicher Lichtfarben einer Kraftfahrzeugleuchte 01 zumindest den durch die Lichtscheibe 03 hindurch sichtbaren Teil der Projektionsfläche 05 flächenanteilig teilen, wie in Fig. 10 a), b), c), d) schematisch dargestellt. Dabei steht zunächst zumindest der gesamte durch die Lichtscheibe 03 hindurch sichtbare Teil der Projektionsfläche 05 der variablen Projektion jeder allein und einzeln momentan benötigten Lichtfunktion RL, BL, WL, SL wie in Fig. 10 a) dargestellt zur Nutzung zur Verfügung. Wird momentan beispielsweise wie in Fig. 10 a) dargestellt nur eine Rücklichtfunktion RL oder eine Bremslichtfunktion BL oder eine Wiederholblinklichtfunktion WL oder eine Rückfahrlichtfunktion SL benötigt, so steht dieser Lichtfunktion die gesamte Projektionsfläche und damit die gesamte Lichtscheibe als Lichtdurchtrittsfläche zur Verfügung. Für die Nebellichtfunktion NL entfällt diese Möglichkeit, da gesetzlich vorgeschrieben ist, dass die Nebellichtfunktion NL nur gemeinsam mit der Rücklichtfunktion RL in Betrieb sein darf.

Kommt eine weitere Lichtfunktion RL, BL, WL, SL, NL hinzu, weil diese durch Einschalten einer weiteren Lichtfunktion RL, BL, WL, SL, NL momentan benötigt wird, so müssen sich die variablen Projektionen der dann momentan benötigten bzw. aktiven Lichtfunktionen RL, BL, WL, SL, NL die Nutzung zumindest des durch die Lichtscheibe 03 hindurch sichtbaren Teils der Projektionsfläche 05 teilen. Dies geschieht wie in Fig. 10 b) bis d) für Lichtfunktionen RL, BL, WL, SL, NL dargestellt flächenanteilig.

Beispielsweise kann bei einer zusätzlich zu einer momentan benötigten Rücklichtfunktion RL momentan benötigten Bremslichtfunktion BL die Projektion der Rücklichtfunktion RL die Projektion der Bremslichtfunktion BL auf der Projektionsfläche 05 teilweise oder wie in Fig. 10 b) dargestellt vollständig umgeben. Kommt zu der bei eingeschalteter Rücklichtfunktion RL während einer Bremstätigkeit momentan benötigten Bremslichtfunktion BL noch eine Wiederholblinklichtfunktion WL als momentan benötigte Lichtfunktion hinzu, so kann beispielsweise vorgesehen sein, dass die variablen Projektionen sowohl die Bremslichtfunktion BL, als auch die Wiederholblinklichtfunktion WL gemeinsam von der variablen Projektion der Rücklichtfunktion RL vollständig oder wie in Fig. 10 c) dargestellt teilweise umgeben sein können.

Wird dann noch zusätzlich beispielsweise eine Nebellichtfunktion NL benötigt und gleichzeitig eine Rückfahrlichtfunktion SL, beispielsweise während eines bei Dunkelheit und durch Nebel behinderter Sicht gebremsten rückwärts Einbiegens etwa in eine Parklücke, teilen sich die dann momentan benötigten Lichtfunktionen Rücklichtfunktion RL, Bremslichtfunktion BL, Wiederholblinklichtfunktion WL, Nebellichtfunktion NL und Rückfahrlichtfunktion SL die Nutzung der Projektionsfläche 05, wie in Fig. 10 d) dargestellt. Dabei kann die Rücklichtfunktion RL die anderen momentan benötigten Lichtfunktionen BL, WL, NL, SL jeweils einzeln oder gemeinsam teilweise oder vollständig umgeben.

Wichtig ist hervorzuheben, dass bei der Erfindung keine feste Zuordnung von Teilen der Projektionsfläche 05 zu den Lichtfunktionen RL, BL, WL, SL, NL vorgesehen sein muss. Grundsätzlich ist beispielsweise eine individuelle Anpassung einer Zuordnung noch an der fertig hergestellten Kraftfahrzeugleuchte 01 möglich. Dadurch kann der Herstellungsaufwand für die bisher benötigte Typenvielfalt und ―varianz von Kraftfahrzeugleuchten erheblich verringert werden.

Das mindestens eine Mittel 06 zur variablen Projektion der momentan benötigten einen oder mehreren Lichtfunktionen RL, BL, WL, SL, NL der Kraftfahrzeugleuchte 01 zumindest auf den vollständigen, von einem Betrachter B von außerhalb des Leuchteninnenraums 04 durch die Lichtscheibe 03 hindurch sichtbaren Teil der Projektionsfläche 05 kann mindestens ein Leuchtmittel 16 mit wenigstens einer Lichtquelle 13, 14, 15 umfassen.

Vorzugsweise sind das mindestens eine Leuchtmittel 16 sowie die wenigstens eine Lichtquelle 13, 14, 15 des mindestens einen Leuchtmittels 16 insgesamt in der Lage, zumindest Licht in allen zur Erfüllung der Lichtfunktionen RL, BL, WL, SL, NL der Kraftfahrzeugleuchte 01 benötigten Lichtfarben abzustrahlen. Bei den Lichtquellen 13, 14, 15 kann es sich beispielsweise um Glühlampen oder wie in Fig. 5 b) dargestellt um LED-Chips (LED; Lichtemittierende Diode) 29 handeln.

Den Lichtquellen 13, 14, 15 können Reflektoren 27 zugeordnet sein.

Die einzelnen Lichtquellen 13, 14, 15 können beispielsweise Licht in Grundfarben abstrahlen, welche dann durch Veränderung der Helligkeit der beteiligten Lichtquellen und Kombination bzw. Zusammenführung ihrer Strahlengänge eine Erzeugung beliebiger, zumindest der für die Lichtfunktionen der Kraftfahrzeugleuchte 01 benötigter Lichtfarben zulässt. Zur Kombination bzw. Zusammenführung der Strahlengänge 30, 31, 32 mehrerer unterschiedliche Grundfarben emittierender Lichtquellen 13, 14, 15 zu einem gemeinsamen Strahlengang 33 kann wie in den Fig. 6, Fig. 8 und Fig. 9a) dargestellt ein kurz auch als TIR-Prisma (TIR; Total Internal Reflektion) bezeichnetes Totalreflexions-Prisma 28 vorgesehen sein. Alternativ oder zusätzlich können auch ein oder mehrere dichroitische Spiegel 26 vorgesehen sein, wie in den Fig. 5 a) b) und c) dargestellt. Ein dichroitischer Spiegel 26 reflektiert dabei einen Wellenlängenbereich, wobei er einen zweiten Wellenlängenbereich transmittiert.

Hierbei können bei mehreren Leuchtmitteln 16 für jedes Leuchtmittel 16 getrennte Strahlengänge zur Projektionsfläche 05 vorgesehen sein, wie in Fig. 4 dargestellt, oder es kann wie in Fig. 6 dargestellt ein gemeinsamer Strahlengang für mehrere unterschiedliche Leuchtmittel 16 der Mittel 06 zur variablen Projektion der momentan benötigten einen oder mehreren Lichtfunktionen RL, BL, WL, SL, NL zur Projektionsfläche 05 vorgesehen sein. Fig. 6 zeigt hierbei die Zusammenführung der Strahlengänge 17, 18, 19 dreier Leuchtmittel 16, von denen der Übersichtlichkeit halber nur eines dargestellt ist, vermittels beispielsweise zumindest eines TIR- bzw. Totalreflexions-Prismas 20 zu einem gemeinsamen, durch den Pfeil P schematisch dargestellten Strahlengang zur Projektionsfläche 05 hin.

Die Mittel 06 zur variablen Projektion einer oder mehrerer Lichtfunktionen RL, BL, WL, SL, NL der Kraftfahrzeugleuchte 01 zumindest auf den vollständigen von außerhalb des Leuchteninnenraums 04 durch die Lichtscheibe 03 hindurch sichtbaren Teil der Projektionsfläche 05 können außerdem Mittel 22 zur veränderlichen Steuerung der Lichtabstrahlrichtung des mindestens einen Leuchtmittels 16 auf wenigstens eine veränderliche Partie 21 (Fig. 10) der Projektionsfläche 05 umfassen. Jede veränderliche Partie 21 entspricht dabei der variablen Projektion einer momentan benötigten Lichtfunktion RL, BL, WL, SL, NL der Kraftfahrzeugleuchte 01. Die Dimensionen der mindestens einen veränderlichen Partie 21 der Projektionsfläche 05 sind dabei zwischen einem Teil der Projektionsfläche 05 und der vollständigen Projektionsfläche 05 veränderlich bzw. variabel.

Die Mittel 22 zur veränderlichen Steuerung der Lichtabstrahlrichtung des mindestens einen Leuchtmittels 16 auf wenigstens eine veränderliche Partie 21 der Projektionsfläche 05 können beispielsweise durch mindestens einen Mikrospiegelaktor 23 verwirklicht sein oder einen solchen umfassen.

Die Mittel 06 zur variablen Projektion einer oder mehrerer Lichtfunktionen RL, BL, WL, SL, NL der Kraftfahrzeugleuchte 01 zumindest auf den vollständigen von außerhalb des Leuchteninnenraums 04 durch die Lichtscheibe 03 hindurch sichtbaren Teil der Projektionsfläche 05 können mindestens eine wenigstens einem Leuchtmittel 16 zugeordnete Primäroptik 24 umfassen, beispielsweise um den Strahlengang eines oder mehrerer Leuchtmittel 16 in Richtung der Mittel 22 zur veränderlichen Steuerung der Lichtabstrahlrichtung zu bündeln.

Darüber hinaus können die Mittel 06 zur variablen Projektion einer oder mehrerer Lichtfunktionen RL, BL, WL, SL, NL der Kraftfahrzeugleuchte 01 zumindest auf den vollständigen von außerhalb des Leuchteninnenraums 04 durch die Lichtscheibe 03 hindurch sichtbaren Teil der Projektionsfläche 05 zumindest eine Sekundäroptik 25 umfassen, welche beispielsweise dazu dienen kann, die Abbildung der Projektion der Lichtfunktionen RL, BL, WL, SL, NL auf die vollständige Projektionsfläche 05 zu vergrößern. Bei der Sekundäroptik handelt es sich beispielsweise vereinfacht um ein Objektiv.

Wichtig ist hervorzuheben, dass anstelle mindestens eines zur Zusammenführung der Strahlengänge 17, 18, 19 mehrerer Leuchtmittel zu einem durch den Pfeil P angedeuteten gemeinsamen Strahlengang vorgesehenen TIR- bzw. Totalreflexions-Prismas 20 oder zusätzlich zu mindestens einem solchen auch ein oder mehrere dichroitische Spiegel zur Kombination bzw. Zusammenführung der Strahlengänge 17, 18, 19 mehrerer Leuchtmittel 16 zu einem gemeinsamen Strahlengang vorgesehen sein können.

Durch die Erfindung kann die nach dem Stand der Technik übliche strikte Kammertrennung der einzelnen Lichtfunktionen aufgehoben werden. Die Erfindung erlaubt die Anwendung des Prinzips einer Videoprojektion auf Kraftfahrzeugleuchten.

Dies erlaubt beliebige Umrisse und geometrische Gestaltungen der Lichtfunktionen sowie eine Einstellung deren Helligkeit bzw. Dimmung. Werden mehrere Lichtquellen unterschiedlicher Farbe oder geeignete optische Filteranordnungen verwendet, können in der Projektion auch Mischfarben oder separate einfarbige Felder erzeugt werden.

Die Erfindung ist insbesondere im Bereich der Herstellung von Kraftfahrzeugleuchten gewerblich anwendbar.

### Bezugszeichenliste

- 01: Kraftfahrzeugleuchte
- 02: Gehäuse
- 03: Lichtscheibe
- 04: Leuchteninnenraum
- 05: Projektionsfläche
- 06: Mittel zur variablen Projektion von Lichtfunktionen auf die Projektionsfläche
- 07: Oberflächenstruktur
- 08: Optikelement
- 09: Innenseite
- 10: Steuersignal
- 11: Steuersignal
- 12: Steuersignal
- 13: Lichtquelle
- 14: Lichtquelle
- 15: Lichtquelle
- 16: Leuchtmittel
- 17: Strahlengang
- 18: Strahlengang
- 19: Strahlengang
- 20: Totalreflexions-Prisma
- 21: veränderliche Partie der Projektionsfläche
- 22: Mittel zur veränderlichen Steuerung der Lichtabstrahlrichtung
- 23: Mikrospiegelaktor
- 24: Primäroptik
- 25: Sekundäroptik
- 26: dichroitischer Spiegel
- 27: Reflektor
- 28: Totalreflexions-Prisma
- 29: LED-Chip
- 30: Strahlengang
- 31: Strahlengang
- 32: Strahlengang
- 33: gemeinsamer Strahlengang

- RL: Rücklichtfunktion
- BL: Bremslichtfunktion
- WL: Wiederholblinklichtfunktion
- SL: Rückfahrlichtfunktion
- NL: Nebellichtfunktion
- B: Betrachter
- P: gemeinsamer Strahlengang

## Patentansprüche

1. Kraftfahrzeugleuchte (01), welche als Heckleuchte ausgeführt ist, mit zumindest zwei Lichtfunktionen (RL, BL, WL, SL, NL) und einem von einem Gehäuse (02) und einer Lichtscheibe (03) umschlossenen Leuchteninnenraum (04), umfassend mindestens eine von der Kraftfahrzeugleuchte (01) beherbergte und von außen durch die Lichtscheibe (03) hindurch zumindest zum Teil sichtbare Projektionsfläche (05) sowie mindestens ein Mittel (06) zur variablen Projektion der momentan benötigten einen oder mehreren Lichtfunktionen (RL, BL, WL, SL, NL) der Kraftfahrzeugleuchte (01) zumindest auf den vollständigen, von außen durch die Lichtscheibe (03) hindurch sichtbaren Teil der Projektionsfläche (05),
**dadurch gekennzeichnet,**
**dass** zunächst zumindest der gesamte durch die Lichtscheibe (03) hindurch sichtbare Teil der Projektionsfläche (05) der variablen Projektion jeder allein und einzeln momentan benötigten Lichtfunktion (RL, BL, WL, SL, NL) zur Nutzung zur Verfügung steht, wobei durch Betrachtung der zumindest den von außerhalb des Leuchteninnenraums (04) durch die Lichtscheibe (03) hindurch sichtbaren Teil der Projektionsfläche (05) vollständig einnehmenden Projektion von außerhalb des Leuchteninnenraums (04) durch die Lichtscheibe (03) hindurch dieser allein und einzeln momentan benötigten Lichtfunktion (RL, BL, WL, SL, NL) die gesamte Lichtscheibe (03) als Lichtdurchtrittsfläche zur Verfügung steht, und wenn eine weitere Lichtfunktion (RL, BL, WL, SL, NL) momentan benötigt wird, sich die daraus ergebenden variablen Projektionen aller unterschiedlicher Kombinationen momentan benötigter Lichtfunktionen (RL, BL, WL, SL, NL) die Nutzung teilen, so dass wenn momentan mehrere Lichtfunktionen (RL, BL, WL, SL, NL) benötigt sind, sich deren variable Projektionen die Projektionsfläche (05) flächenanteilig teilen und immer die gesamte Lichtscheibe (03) als Lichtdurchtrittsfläche für die eine oder mehrere momentan benötigten Lichtfunktionen (RL, BL, WL, SL, NL) genutzt wird.

2. Kraftfahrzeugleuchte nach Anspruch 1,
**dadurch gekennzeichnet,**
**dass** das flächenanteilige Verhältnis der Nutzung der Projektionsfläche (05) durch die variable Projektion der einzelnen Lichtfunktionen (RL, BL, WL, SL, NL) mehrerer momentan benötigter Lichtfunktionen (RL, BL, WL, SL, NL) zumindest abhängig von einem Verhältnis der Wichtigkeit der Signalfunktionen der beteiligten Lichtfunktionen (RL, BL, WL, SL, NL) und/oder den herrschenden Umgebungsbedingungen ist.

3. Kraftfahrzeugleuchte nach Anspruch 1 oder 2,
**gekennzeichnet durch**
eine Betrachtung der zumindest den von außerhalb des Leuchteninnenraums (04) durch die Lichtscheibe (03) hindurch sichtbaren Teils der Projektionsfläche (05) vollständig einnehmenden Projektion im Durchlicht bzw. durchscheinend oder im Auflicht bzw. rückscheinend von außerhalb des Leuchteninnenraums (04) **durch** die Lichtscheibe (03) hindurch, wobei die Projektionsfläche (05) zur Projektion der momentan benötigten einen oder mehreren Lichtfunktionen (RL, BL, WL, SL, NL) im Auflicht rückscheinend und/oder im Durchlicht durchscheinend ausgebildet ist.

4. Kraftfahrzeugleuchte nach einem der vorhergehenden Ansprüche,
**dadurch gekennzeichnet,**
**dass** mindestens eine von der Kraftfahrzeugleuchte (01) beherbergte Projektionsfläche (05) in dem Leuchteninnenraum (04) angeordnet ist.

5. Kraftfahrzeugleuchte nach einem der vorhergehenden Ansprüche,
**dadurch gekennzeichnet,**
**dass** mindestens eine von der Kraftfahrzeugleuchte (01) beherbergte Projektionsfläche (05) an der Innenseite (09) der Lichtscheibe (03) vorgesehen ist.

6. Kraftfahrzeugleuchte nach einem der vorhergehenden Ansprüche,
**dadurch gekennzeichnet,**
**dass** mindestens eine von der Kraftfahrzeugleuchte (01) beherbergte Projektionsfläche (05) durch die Innenseite (09) der Lichtscheibe (03) gebildet ist.

7. Kraftfahrzeugleuchte nach einem der vorhergehenden Ansprüche,
**dadurch gekennzeichnet,**
**dass** mindestens eine von der Kraftfahrzeugleuchte (01) beherbergte Projektionsfläche (05) an einer der Lichtscheibe (03) gegenüberliegenden Rückwand des Leuchteninnenraums (04) vorgesehen ist.

8. Kraftfahrzeugleuchte nach einem der vorhergehenden Ansprüche,
**gekennzeichnet durch**
eine von der Kraftfahrzeugleuchte (01) beherbergte Lichtleiteranordnung mit einer als die Projektionsfläche (05) ausgeführten Lichtaustrittsfläche sowie mindestens einer von der Projektionsfläche (05) verschiedenen Lichteinkoppelfläche, an welcher Licht für die momentan benötigte eine oder mehreren Lichtfunktionen (RL, BL, WL, SL, NL) variabel einkoppelbar ist, das dann an der Projektionsfläche (05) vollständig über diese verteilt aus der Lichtleiteranordnung austritt.

9. Kraftfahrzeugleuchte nach einem der vorhergehenden Ansprüche,
**dadurch gekennzeichnet,**
**dass** die Mittel (06) zur variablen Projektion einer oder mehrerer Lichtfunktionen (RL, BL, WL, SL, NL) der Kraftfahrzeugleuchte (01) zumindest auf den vollständigen von außerhalb des Leuchteninnenraums (04) durch die Lichtscheibe (03) hindurch sichtbaren Teil der Projektionsfläche (05) mindestens ein Leuchtmittel (16) mit wenigstens einer Lichtquelle (13, 14, 15) umfassen.

10. Kraftfahrzeugleuchte nach einem der vorhergehenden Ansprüche,
**dadurch gekennzeichnet,**
**dass** das mindestens eine Leuchtmittel (16) sowie die wenigstens eine Lichtquelle (13, 14, 15) des mindestens einen Leuchtmittels (16) insgesamt in der Lage sind, zumindest Licht in allen zur Erfüllung der mindestens zwei Lichtfunktionen (RL, BL, WL, SL, NL) der Kraftfahrzeugleuchte (01) benötigten Lichtfarben abzustrahlen.

11. Kraftfahrzeugleuchte nach einem der vorhergehenden Ansprüche,
**dadurch gekennzeichnet,**
**dass** die Mittel (06) zur variablen Projektion einer oder mehrerer Lichtfunktionen (RL, BL, WL, SL, NL) der Kraftfahrzeugleuchte (01) zumindest auf den vollständigen von außerhalb des Leuchteninnenraums (04) durch die Lichtscheibe (03) hindurch sichtbaren Teil der Projektionsfläche (05) Mittel (22, 23) zur veränderlichen Steuerung der Lichtabstrahlrichtung des mindestens einen Leuchtmittels (16) auf wenigstens eine veränderliche Partie (21) der Projektionsfläche (05) umfassen, wobei die Dimensionen der veränderlichen Partie (21) der Projektionsfläche (05) zwischen einem Teil der Projektionsfläche (05) und der vollständigen Projektionsfläche (05) variabel sind.

12. Kraftfahrzeugleuchte nach Anspruch 11,
**dadurch gekennzeichnet,**
**dass** die Mittel (22) zur veränderlichen Steuerung der Lichtabstrahlrichtung des mindestens einen Leuchtmittels (16) auf wenigstens eine veränderliche Partie (21) der Projektionsfläche (05) wenigstens einen Mikrospiegelaktor (23) umfassen.

13. Kraftfahrzeugleuchte nach einem der vorhergehenden Ansprüche,
**dadurch gekennzeichnet,**
**dass** die Mittel (22) zur variablen Projektion einer oder mehrerer Lichtfunktionen (RL, BL, WL, SL, NL) der Kraftfahrzeugleuchte (01) auf die Projektionsfläche (05) die Projektionsfläche (05) selbst umfassen und/oder ein Teil dieser sind und/oder von dieser umfasst werden.

14. Verfahren zum Betrieb einer Kraftfahrzeugleuchte (01) nach einem der vorhergehenden Ansprüche, welche als Heckleuchte ausgeführt ist, mit zumindest zwei Lichtfunktionen (RL, BL, WL, SL, NL) und einem von einem Gehäuse (02) und einer Lichtscheibe (03) umschlossenen Leuchteninnenraum (04), umfassend mindestens eine von der Kraftfahrzeugleuchte (01) beherbergte und von außen durch die Lichtscheibe (03) hindurch zumindest zum Teil sichtbare Projektionsfläche (05) sowie mindestens ein Mittel (06) zur variablen Projektion der momentan benötigten einen oder mehreren Lichtfunktionen (RL, BL, WL, SL, NL) der Kraftfahrzeugleuchte (01) zumindest auf den vollständigen, von außen durch die Lichtscheibe (03) hindurch sichtbaren Teil der Projektionsfläche (05),
**dadurch gekennzeichnet,**
**dass** zunächst zumindest der gesamte durch die Lichtscheibe (03) hindurch sichtbare Teil der Projektionsfläche (05) der variablen Projektion jeder allein und einzeln momentan benötigten Lichtfunktion (RL, BL, WL, SL, NL) zur Nutzung zur Verfügung steht, wobei durch Betrachtung der zumindest den von außerhalb des Leuchteninnenraums (04) durch die Lichtscheibe (03) hindurch sichtbaren Teil der Projektionsfläche (05) vollständig einnehmenden Projektion von außerhalb des Leuchteninnenraums (04) durch die Lichtscheibe (03) hindurch dieser allein und einzeln momentan benötigten Lichtfunktion (RL, BL, WL, SL, NL) die gesamte Lichtscheibe (03) als Lichtdurchtrittsfläche zur Verfügung steht, und wenn eine weitere Lichtfunktion (RL, BL, WL, SL, NL) momentan benötigt wird, sich die daraus ergebenden variablen Projektionen aller unterschiedlicher Kombinationen momentan benötigter Lichtfunktionen (RL, BL, WL, SL, NL) die Nutzung teilen, so dass wenn momentan mehrere Lichtfunktionen (RL, BL, WL, SL, NL) benötigt sind, sich deren variable Projektionen die Projektionsfläche (05) flächenanteilig teilen und immer die gesamte Lichtscheibe (03) als Lichtdurchtrittsfläche für die eine oder mehrere momentan benötigten Lichtfunktionen (RL, BL, WL, SL, NL) genutzt wird.

## Claims

1. A motor vehicle lamp (01), which is designed as a tail light, with at least two lighting functions (RL, BL, WL, SL, NL) and with a lamp interior (04) enclosed by a housing (02) and a lens (03), said motor vehicle lamp (01) comprising at least one projection surface (05) accommodated by the motor vehicle lamp (01), said projection surface (05) being at least partly visible through the lens (03) from the outside, and said motor vehicle lamp (01) also comprising at least one means (06) for variably projecting the momentarily required one or several lighting functions (RL, BL, WL, SL, NL) of the motor vehicle lamp (01) onto at least that entire part of the projection surface (05) which is visible through the lens (03) from the outside,
**characterised in that**
at least that entire part of the projection surface (05) which is visible through the lens (03) is in the first instance available for being used by each momentarily required lighting function (RL, BL, WL, SL, NL) on its own and individually, wherein the entire lens (03) is available as a light passage surface for each momentarily required lighting function (RL, BL, WL, SL, NL) on its own and individually when the projection, which takes up at least that entire part of the projection surface (05) which is visible through the lens (03) from the outside of the lamp interior (04), is viewed through the lens (03) from the outside of the lamp interior (04), and in the instance of a further lighting function (RL, BL, WL, SL, NL) being momentarily required, the resulting variable projections of all different combinations of momentarily required lighting functions (RL, BL, WL, SL, NL) share the use so that, in the instance of several lighting functions (RL, BL, WL, SL, NL) being momentarily required, their variable projections proportionately share the projection surface (05), and the entire lens (03) is in each case used as a light passage surface for the one or several momentarily required lighting functions (RL, BL, WL, SL, NL).

2. A motor vehicle lamp according to claim 1,
**characterised in that**
the proportional relationship of projection surface (05) usage by the variable projection of the individual lighting functions (RL, BL, WL, SL, NL) of several momentarily required lighting functions (RL, BL, WL, SL, NL) is at least dependent on a relationship of the importance of the signal functions of the lighting functions (RL, BL, WL, SL, NL) involved and/or of the prevailing ambient conditions.

3. A motor vehicle lamp according to claim 1 or 2,
**characterised by**
a view through the lens (03) from the outside of the lamp interior (04) of the projection, which takes up at least that entire part of the projection surface (05) which is visible through the lens (03) from the outside of the lamp interior (04), in transmitted light, i.e. translucent, or in incident light, i.e. reflected, wherein the projection surface (05) for projecting the momentarily required one or several lighting functions (RL, BL, WL, SL, NL) is designed to be reflective in incident light and/or translucent in transmitted light.

4. A motor vehicle lamp according to one of the previous claims,
**characterised in that**
at least one of the projection surfaces (05) accommodated by the motor vehicle lamp (01) is arranged in the lamp interior (04).

5. A motor vehicle lamp according to one of the previous claims,
**characterised in that**
at least one of the projection surfaces (05) accommodated by the motor vehicle lamp (01) is provided at the inside (09) of the lens (03).

6. A motor vehicle lamp according to one of the previous claims,
**characterised in that**
at least one of the projection surfaces (05) accommodated by the motor vehicle lamp (01) is formed by the inside (09) of the lens (03).

7. A motor vehicle lamp according to one of the previous claims,
**characterised in that**
at least one of the projection surfaces (05) accommodated by the motor vehicle lamp (01) is provided at a rear wall of the lamp interior (04) located opposite to the lens (03).

8. A motor vehicle lamp according to one of the previous claims,
**characterised by**
the said motor vehicle lamp (01) accommodating a light conductor arrangement with a light emitting surface designed as projection surface (05) and also accommodating at least one light coupling surface that is distinct from the projection surface (05), said light coupling surface being used for variably coupling light into the one or several momentarily required lighting functions (RL, BL, WL, SL, NL), said light then being completely distributed across the projection surface (05) and emitted from the light conductor arrangement.

9. A motor vehicle lamp according to one of the previous claims,
**characterised in that**
the means (06) for variably projecting one or several lighting functions (RL, BL, WL, SL, NL) of the motor vehicle lamp (01) onto at least that entire part of the projection surface (05) which is visible through the lens (03) from outside the lamp interior (04) comprise at least one lighting means (16) with at least one light source (13, 14, 15).

10. A motor vehicle lamp according to one of the previous claims,
**characterised in that**
the at least one lighting means (16) and the at least one light source (13, 14, 15) of the at least one lighting means (16) are together able to emit light in at least all colours required for performing the at least two lighting functions (RL, BL, WL, SL, NL) of the motor vehicle lamp (01).

11. A motor vehicle lamp according to one of the previous claims,
**characterised in that**
the means (06) for variably projecting one or several lighting functions (RL, BL, WL, SL, NL) of the motor vehicle lamp (01) onto at least that entire part of the projection surface (05) which is visible through the lens (03) from outside the lamp interior (04) comprise means (22, 23) for adjustably controlling the light emission direction of the at least one lighting means (16) onto at least one modifiable section (21) of the projection surface (05) wherein the dimensions of the modifiable section (21) of the projection surface (05) can be varied between a part of the projection surface (05) and the entire projection surface (05).

12. A motor vehicle lamp according to claim 11,
**characterised in that**
the means (22) for adjustably controlling the light emission direction of the at least one lighting means (16) onto at least one modifiable section (21) of the projection surface (05) comprise at least one digital micromirror device (23).

13. A motor vehicle lamp according to one of the previous claims,
**characterised in that**
the means (22) for variably projecting one or several lighting functions (RL, BL, WL, SL, NL) of the motor vehicle lamp (01) onto the projection surface (05) comprise the projection surface (05) itself and/or are a part thereof and/or are comprised by the projection surface (05).

14. A method for operating a motor vehicle lamp (01) according to one of the previous claims, said motor vehicle lamp being designed as a tail light, with at least two lighting functions (RL, BL, WL, SL, NL) and with a lamp interior (04) enclosed by a housing (02) and a lens (03), and said motor vehicle lamp (01) comprising at least one projection surface (05) accommodated by the motor vehicle lamp (01), said projection surface (05) being at least partly visible through the lens (03) from the outside, and said motor vehicle lamp (01) also comprising at least one means (06) for variably projecting the momentarily required one or several lighting functions (RL, BL, WL, SL, NL) of the motor vehicle lamp (01) onto at least that entire part of the projection surface (05) which is visible through the lens (03) from the outside,
**characterised in that**
at least that entire part of the projection surface (05) which is visible through the lens (03) is in the first instance available for being used by each momentarily required lighting function (RL, BL, WL, SL, NL) on its own and individually, wherein the entire lens (03) is available as a light passage surface for each momentarily required lighting function (RL, BL, WL, SL, NL) on its own and individually when the projection, which takes up at least that entire part of the projection surface (05) which is visible through the lens (03) from the outside of the lamp interior (04), is viewed through the lens (03) from the outside of the lamp interior (04), and in the instance of a further lighting function (RL, BL, WL, SL, NL) being momentarily required, the resulting variable projections of all different combinations of momentarily required lighting functions (RL, BL, WL, SL, NL) share the use so that, in the instance of several lighting functions (RL, BL, WL, SL, NL) being momentarily required, their variable projections proportionately share the projection surface (05), and the entire lens (03) is in each case used as a light passage surface for the one or several momentarily required lighting functions (RL, BL, WL, SL, NL).

## Revendications

1. Lampe de véhicule automobile (01) qui est réalisée comme feu arrière, ayant au moins deux fonctions de lumière (RL, BL, WL, SL, NL) et un volume intérieur de lampe (04) qui est entouré par un boîtier (02) et par une glace (03), comprenant au moins une surface de projection (05) qui est logée par la lampe de véhicule automobile (01) et est visible, au moins en partie, de l'extérieur à travers la glace (03) ainsi qu'au moins un moyen (06) pour projeter d'une manière variable ladite une ou plusieurs fonction(s) de lumière (RL, BL, WL, SL, NL) momentanément requise(s) de la lampe de véhicule automobile (01) au moins sur la partie complète de la surface de projection (05), qui est visible de l'extérieur à travers ladite glace (03),
**caractérisée par le fait**
**que**, d'abord, au moins l'ensemble de la partie de la surface de projection (05), qui est visible à travers la glace (03), est disponible pour être utilisée pour la projection variable de chaque fonction de lumière (RL, BL, WL, SL, NL) momentanément requise seule et individuellement, dans laquelle, en regardant, de l'extérieur du volume intérieur de lampe (04) à travers la glace (03), la projection occupant complètement au moins la partie de la surface de projection (05), qui est visible de l'extérieur du volume intérieur de lampe (04) à travers la glace (03), cette fonction de lumière (RL, BL, WL, SL, NL) momentanément requise seule et individuellement dispose de l'ensemble de la glace (03) en tant que surface de passage de lumière, et dans laquelle, si une autre fonction de lumière (RL, BL, WL, SL, NL) est momentanément requise, les projections variables en résultant de toutes les combinaisons différentes de fonctions de lumière (RL, BL, WL, SL, NL) momentanément requises se partagent entre elles l'utilisation de sorte que, lorsque plusieurs fonctions de lumière (RL, BL, WL, SL, NL) sont momentanément requises, leurs projections variables se partagent entre elles, proportionnellement à la surface, la surface de projection (05) et que toujours l'ensemble de la glace (03) est utilisée en tant que surface de passage de lumière pour ladite une ou plusieurs fonction(s) de lumière (RL, BL, WL, SL, NL) momentanément requise(s).

2. Lampe de véhicule automobile selon la revendication 1, **caractérisée par le fait que** le rapport proportionnel à la surface, de l'utilisation de la surface de projection (05) par la projection variable des fonctions de lumière individuelles (RL, BL, WL, SL, NL) de plusieurs fonctions de lumière (RL, BL, WL, SL, NL) momentanément requises est fonction au moins d'un rapport de l'importance des fonctions de signal des fonctions de lumière (RL, BL, WL, SL, NL) impliquées et/ou des conditions ambiantes existantes.

3. Lampe de véhicule automobile selon la revendication 1 ou 2, **caractérisée par** une observation - en lumière transmise ou bien translucide ou en lumière incidente ou bien réfléchissante, de l'extérieur du volume intérieur de lampe (04) à travers la glace (03) - de la projection occupant complètement au moins la partie de la surface de projection (05), qui est visible de l'extérieur du volume intérieur de lampe (04) à travers la glace (03), ladite surface de projection (05) étant réalisée, pour la projection de ladite une ou plusieurs fonction(s) de lumière (RL, BL, WL, SL, NL) momentanément requise(s), de manière à être réfléchissante en lumière incidente et/ou translucide en lumière transmise.

4. Lampe de véhicule automobile selon l'une quelconque des revendications précédentes, **caractérisée par le fait qu'**au moins une surface de projection (05) logée par ladite lampe de véhicule automobile (01) est disposée dans ledit volume intérieur de lampe (04).

5. Lampe de véhicule automobile selon l'une quelconque des revendications précédentes, **caractérisée par le fait qu'**au moins une surface de projection (05) logée par ladite lampe de véhicule automobile (01) est prévue sur la face intérieure (09) de ladite glace (03).

6. Lampe de véhicule automobile selon l'une quelconque des revendications précédentes, **caractérisée par le fait qu'**au moins une surface de projection (05) logée par ladite lampe de véhicule automobile (01) est constituée par la face intérieure (09) de la glace (03).

7. Lampe de véhicule automobile selon l'une quelconque des revendications précédentes, **caractérisée par le fait qu'**au moins une surface de projection (05) logée par ladite lampe de véhicule automobile (01) est prévue sur un panneau arrière du volume intérieur de lampe (04), qui est situé en regard de ladite glace (03).

8. Lampe de véhicule automobile selon l'une quelconque des revendications précédentes, **caractérisée par** un ensemble de guides de lumière logé par la lampe de véhicule automobile (01) et ayant une surface de sortie de lumière réalisée comme la surface de projection (05) ainsi qu'au moins une surface d'entrée de lumière qui est différente de la surface de projection (05) et sur laquelle de la lumière pour ladite une ou plusieurs fonction(s) de lumière (RL, BL, WL, SL, NL) momentanément requise(s) peut être couplée d'une manière variable, qui sort ensuite, sur ladite surface de projection (05), complètement répartie sur celle-ci, de l'ensemble de guides de lumière.

9. Lampe de véhicule automobile selon l'une quelconque des revendications précédentes, **caractérisée par le fait que** les moyens (06) pour projeter d'une manière variable une ou plusieurs fonction(s) de lumière (RL, BL, WL, SL, NL) de la lampe de véhicule automobile (01) au moins sur la partie complète de la surface de projection (05), qui est visible de l'extérieur du volume intérieur de lampe (04) à travers ladite glace (03), comprennent au moins un moyen lumineux (16) avec au moins une source de lumière (13, 14, 15).

10. Lampe de véhicule automobile selon l'une quelconque des revendications précédentes, **caractérisée par le fait que** ledit au moins un moyen lumineux (16) ainsi que ladite au moins une source de lumière (13, 14, 15) dudit au moins un moyen lumineux (16) sont aptes dans l'ensemble de rayonner au moins de la lumière dans toutes les couleurs de lumière nécessaires à remplir lesdites au moins deux fonctions de lumière (RL, BL, WL, SL, NL) de la lampe de véhicule automobile (01).

11. Lampe de véhicule automobile selon l'une quelconque des revendications précédentes, **caractérisée par le fait que** les moyens (06) pour projeter d'une manière variable une ou plusieurs fonction(s) de lumière (RL, BL, WL, SL, NL) de la lampe de véhicule automobile (01) au moins sur la partie complète de la surface de projection (05), qui est visible de l'extérieur du volume intérieur de lampe (04) à travers ladite glace (03), comprennent des moyens (22, 23) de commande variable de la direction de rayonnement de lumière dudit au moins un moyen lumineux (16) sur au moins une partie variable (21) de la surface de projection (05), les dimensions de la partie variable (21) de la surface de projection (05) étant variables entre une partie de la surface de projection (05) et la surface totale de projection (05).

12. Lampe de véhicule automobile selon la revendication 11, **caractérisée par le fait que** lesdits moyens (22) de commande variable de la direction de rayonnement de lumière dudit au moins un moyen lumineux (16) sur au moins une partie variable (21) de la surface de projection (05) comprennent au moins un actionneur à micro-miroir (23).

13. Lampe de véhicule automobile selon l'une quelconque des revendications précédentes, **caractérisée par le fait que** les moyens (22) pour projeter d'une manière variable une ou plusieurs fonction(s) de lumière (RL, BL, WL, SL, NL) de la lampe de véhicule automobile (01) sur la surface de projection (05) comprennent la surface de projection (05) même et/ou sont une partie de celle-ci et/ou sont compris par celle-ci.

14. Procédé de fonctionnement d'une lampe de véhicule automobile (01) selon l'une quelconque des revendications précédentes, qui est réalisée comme feu arrière, ayant au moins deux fonctions de lumière (RL, BL, WL, SL, NL) et un volume intérieur de lampe (04) qui est entouré par un boîtier (02) et par une glace (03), comprenant au moins une surface de projection (05) qui est logée par la lampe de véhicule automobile (01) et est visible, au moins en partie, de l'extérieur à travers la glace (03) ainsi qu'au moins un moyen (06) pour projeter d'une manière variable ladite une ou plusieurs fonction(s) de lumière (RL, BL, WL, SL, NL) momentanément requise(s) de la lampe de véhicule automobile (01) au moins sur la partie complète de la surface de projection (05), qui est visible de l'extérieur à travers ladite glace (03),
**caractérisé par le fait**
**que**, d'abord, au moins l'ensemble de la partie de la surface de projection (05), qui est visible à travers la glace (03), est disponible pour être utilisée pour la projection variable de chaque fonction de lumière (RL, BL, WL, SL, NL) momentanément requise seule et individuellement, dans lequel, en regardant, de l'extérieur du volume intérieur de lampe (04) à travers la glace (03), la projection occupant complètement au moins la partie de la surface de projection (05), qui est visible de l'extérieur du volume intérieur de lampe (04) à travers la glace (03), cette fonction de lumière (RL, BL, WL, SL, NL) momentanément requise seule et individuellement dispose de l'ensemble de la glace (03) en tant que surface de passage de lumière, et dans lequel, si une autre fonction de lumière (RL, BL, WL, SL, NL) est momentanément requise, les projections variables en résultant de toutes les combinaisons différentes de fonctions de lumière (RL, BL, WL, SL, NL) momentanément requises se partagent entre elles l'utilisation de sorte que, lorsque plusieurs fonctions de lumière (RL, BL, WL, SL, NL) sont momentanément requises, leurs projections variables se partagent entre elles, proportionnellement à la surface, la surface de projection (05) et que toujours l'ensemble de la glace (03) est utilisée en tant que surface de passage de lumière pour ladite une ou plusieurs fonction(s) de lumière (RL, BL, WL, SL, NL) momentanément requise(s).
